# EUROPEAN PATENT SPECIFICATION

(11) **EP 3 393 312 B1**
(45) Date of publication and mention of the grant of the patent: **12.02.2020**
(21) Application number: 16822975.5
(22) Date of filing: 20.12.2016
(51) Int. Cl.: A47J 31/36

(54) **BREWING UNIT FOR A BEVERAGE PRODUCING MACHINE AND MACHINE CONTAINING THE BREWING UNIT**
BRÜHEINHEIT FÜR EINE GETRÄNKEZUBEREITUNGSMASCHINE UND MASCHINE MIT DER BRÜHEINHEIT
UNITÉ DE BRASSAGE POUR UNE MACHINE DE PRODUCTION DE BOISSONS ET MACHINE CONTENANT L'UNITÉ DE BRASSAGE

(30) Priority: 22.12.2015 EP 15201960
(43) Date of publication of application: 31.10.2018
(73) Proprietor: Koninklijke Philips N.V., 5656 AE Eindhoven (NL)
(72) Inventor: FIN, Giuseppe, 5656 AE Eindhoven (NL)
(74) Representative: Philips Intellectual Property & Standards
(86) International application number: PCT/EP2016/081879
(87) International publication number: WO 2017/108759

(56) References cited:
- EP-A1- 2 915 465
- WO-A1-2012/046195

## Description

### FIELD OF THE INVENTION

The invention concerns brewing units for producing beverages from pre-packaged capsules, for example but not exclusively for producing coffee. The invention further refers to beverage producing machines comprising said brewing units.

### BACKGROUND OF THE INVENTION

For producing hot drinks and beverages, such as for example coffee, tea, vegetable based infusions and the like, single dose packaging in the form of so-called capsules or pods are often used. Herein after the term capsule will be used to designate any such single dose packaging, including rigid or soft cartridges, pods or capsules, both gas-tight and perforated. It shall be understood that, unless specifically indicated, the term encompasses any kind of single dose packaging suitable for preparing beverages by extraction using hot and possibly pressurized water. A single dose packaging can include sufficient ingredients to prepare more than just one portion beverage, for instance two portions. The term beverage as used herein designates any edible, mainly liquid or semiliquid product.

Some known beverage producing machines comprise a brewing chamber having at least a first brewing chamber portion and a second brewing chamber portion, which are movable one with respect to the other for receiving a capsule therebetween and sealingly closing the capsule in the brewing chamber. Once the brewing chamber is closed, hot and possibly pressurized water is caused to pass through the brewing chamber and the capsule retained therein. The hot water extracts the ingredients contained in the capsule, producing the hot beverage.

WO2012/046195 discloses several embodiments of brewing units for preparing beverages from pre-packed capsules, comprising a supporting structure and a brewing chamber. The brewing chamber in turn comprises a first brewing chamber portion and a second brewing chamber portion, movable one with respect to the other along an opening and closing direction from an open position to a closed position and vice-versa. An actuation mechanism is provided, for closing and opening the brewing chamber. Capsules are introduced into the brewing unit by gravity through a capsule insertion aperture. A capsule guiding arrangement is further provided, between the capsule insertion aperture and a capsule intermediate position, located between the first brewing chamber portion and the second brewing chamber portion, when the first brewing chamber portion and the second brewing chamber portion are in the open position. A mobile deviator is arranged between the first brewing chamber portion and the second brewing chamber portion to retain the capsule in the intermediate position prior to closing the brewing chamber portion. In the intermediate position the capsule is tilted with respect to the final position which it takes in the brewing chamber during the brewing cycle. The insertion of the capsule in the brewing chamber requires, therefore, a tilting movement of the capsule.

EP-A-2103236 discloses a brewing unit which is provided with temporary capsule retention members, which retain the capsule in an intermediate position prior to closing the brewing chamber. A movable brewing chamber portion takes control over the capsule while the brewing chamber is closed and forces the capsule away from the intermediate position. The capsule is subjected to compressive stresses and potential deformations due to the action of the mechanical members thereupon when the capsule is moved from the intermediate position into the brewing chamber.

EP-A-2915465 discloses a brewing unit comprising a supporting structure and a brewing chamber supported by said supporting structure. The brewing chamber comprises in turn a first brewing chamber portion and a second brewing chamber portion, movable one with respect to the other along an opening and closing direction from an open position to a closed position and vice-versa. The brewing unit further comprises an actuation mechanism for closing and opening the brewing chamber. Capsules are introduced in the brewing unit through a capsule insertion aperture. A capsule guiding arrangement is further provided, between the capsule insertion aperture and a capsule intermediate position, where temporary retention means maintain the capsule in an intermediate position prior to closing the brewing chamber. The temporary retention means include a pivoting member which contacts the top surface of a capsule and co-acting with a further component, which engages the rim of the capsule.

It would be desirable to provide a brewing unit, wherein the capsule is handled more gently and is subjected to less manipulating operations to be introduced in the final brewing position.

### SUMMARY OF THE INVENTION

According to one aspect of the invention, a brewing unit for preparing beverages from pre-packed capsules is provided. The brewing unit is defined in claim 1. Further advantageous features and embodiments are set forth in the dependent claims.

The brewing unit comprises in combination: a supporting structure; a brewing chamber comprising a first brewing chamber portion and a second brewing chamber portion, movable one with respect to the other along an opening and closing direction from an open position to a closed position and vice-versa; an actuation mechanism for closing and opening the brewing chamber; a capsule insertion aperture, where through the capsules can be introduced into the brewing unit, preferably by gravity; a capsule guiding arrangement between the capsule insertion aperture and a capsule intermediate position; wherein, when the first brewing chamber portion and the second brewing chamber portion are in the open position the capsule guiding arrangement extends between the first brewing chamber portion and the second brewing chamber portion. According to the invention, the capsule guiding arrangement comprises a first component, stationarily mounted on the supporting structure, and a second component, pivotally mounted on the stationary structure around a pivoting axis approximately orthogonal the opening and closing direction. The pivoting axis can be advantageously arranged between the capsule insertion aperture and the brewing chamber.

The first component of the capsule guiding arrangement is comprised of a first capsule contacting surface, configured and arranged for contacting a top surface of a capsule being introduced in the brewing unit, and the second component of the capsule guiding arrangement is comprised of second capsule contacting surfaces, configured and arranged for engaging a capsule rim surrounding the top surface of the capsule, on a rim surface opposite said top surface. The first capsule contacting surface can be oriented towards the pivoting axis of the second component. The second capsule contacting surfaces can comprise a pair of surfaces which can be distanced from one another in a direction transverse to the opening and closing direction. Each one of the second capsule contacting surfaces can extend approximately from the capsule insertion aperture downwards, towards a position between the first brewing chamber portion and second brewing chamber portion, when these latter are in the open position and the second component of the capsule guiding arrangement is in the capsule receiving position.

As will become apparent from the following description of exemplary embodiments, the foregoing arrangement provides a gentle guidance of the capsule from the capsule insertion aperture to a capsule intermediate position, wherefrom the capsule is then taken in charge by the brewing chamber. During the capsule manipulating steps the capsule is thus subjected to less stress. According to embodiments disclosed herein, by using the above double-component arrangement, the capsule can be positioned with the axis thereof in a direction parallel to the direction of the opening and closing movement, typically, for instance, a horizontal direction. Taking over of the capsule by the brewing chamber portions is easier and does not require the capsule to be forcedly pushed out of engagement with temporarily retaining members, as required in some of the known brewing units mentioned above.

Moreover, also capsules which are not self-supporting, i.e. which are not provided with a rigid body, but are e.g. in the form of soft paper pods, can be handled by the above capsule guiding arrangement.

According to embodiments disclosed herein, the second component of the capsule guiding arrangement can be movable between a first, capsule-receiving position and a second, inoperative position. In the first position, the second, movable component of the capsule guiding arrangement is located between the first brewing chamber portion and the second brewing chamber portion, which are in the open position. In this way the capsule guided by the capsule guiding arrangement can achieve a position along the trajectory of motion of the brewing chamber portions. The second, inoperative position is clear of the of motion trajectory of the first brewing chamber portion or the second brewing chamber portion, such that the brewing chamber can be closed, with the capsule sealingly engaged therein.

The pivoting movement of the second component of the capsule guiding arrangement can be controlled by any suitable means. For instance, if the actuation mechanism comprises a motor, such as an electric motor, suitable motion transmission means from the motor to the second component can be provided. In other, simpler embodiments, the actuation mechanism can be a manual mechanism, including for instance a lever. A motion transmission means can then be provided, connecting the lever or any other manual device to the second component of the capsule guiding arrangement.

In simpler and currently preferred embodiments, the motion of the second component of the capsule guiding arrangement can be controlled by direct co-action with one of the first brewing chamber portion and second brewing chamber portion, such that the second component is pivotally moved from the first, capsule-receiving position to the second, inoperative position by the brewing chamber portion directly pushing or pulling the second component when the brewing chamber portion moves from the open position to the closed position of the brewing chamber.

In some embodiments both brewing chamber portions can be movable with respect to the supporting structure. In such case the second component of the capsule guiding arrangement can be acted upon by one of the movable brewing chamber portions. In some embodiments one of the brewing chamber portions can be provided with a receptacle configured for receiving the capsule therein when the brewing chamber is closed. The brewing chamber portion forming the capsule-receiving receptacle can be movable and can act upon the second component of the capsule guiding arrangement.

In other embodiments only one of the first brewing chamber portion and second brewing chamber portion can be movable with respect to the supporting structure, while the other remains stationary. The second component of the capsule guiding arrangement will in that case be acted upon by the movable brewing chamber portion while the latter moves from an open position towards a closed position against the stationary brewing chamber portion.

The first capsule contacting surface formed on the first component of the capsule guiding arrangement can be located between the mutually distanced second capsule contacting surfaces, such that a capsule introduced through the capsule insertion aperture moves in surface engagement with the first capsule contacting surface and the second capsule contacting surfaces when moving from the capsule insertion aperture towards the capsule intermediate position.

In some embodiments, the second component of the capsule guiding arrangement further comprises a transverse capsule retention member arranged opposite to the second capsule contacting surfaces and extending thereacross. The transverse capsule retention member can be arranged on the second component of the capsule guiding arrangement such that when the second component is in the first, capsule-receiving position, the transverse capsule retention member is positioned adjacent the first component of the capsule guiding arrangement, the first component being located between the capsule insertion aperture and the transverse capsule retention member. The transverse capsule retention member thus forms an extension of the first component of the capsule guiding arrangement, and provides a capsule contacting surface which co-acts with the top surface of the capsule.

In some embodiments, rim engagement slots can be provided on the second component of the capsule guiding arrangement. The slots can engage a capsule rim at two diametrically opposed positions of the rim. The slots can be aligned with the second capsule contacting surfaces formed on the second component of said capsule guiding arrangement, such that during insertion of the capsule in the brewing unit, a capsule rim moves in sliding contact with the capsule contacting surfaces and finally enters into the opposed slots, which engage and retain the rim. The slots may be provided with bottom projections which provide a bottom support for the capsule rim, preventing the rim from falling out of the capsule intermediate position.

According to a further aspect, the invention further relates to a beverage producing machine, comprising a beverage unit as described above. The beverage producing machine can be comprised of a water container and a pump, configured for pumping water from the water container into the brewing unit. A water heater can be arranged along a water duct between the water container and the brewing unit. Preferably, the water heater is arranged between the pump and the brewing unit. The beverage producing machine can be further comprised of a beverage dispensing nozzle wherefrom the beverage produced by the machine is dispensed in a cup.

Other features and advantages of the invention will be better appreciated from the following detailed description of exemplary embodiments.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates an isometric view of a brewing unit according to the invention in an open position;
Fig. 2 illustrates a top view of the brewing unit of Fig. 1;
Fig. 3 illustrates a section according to line III-III in Fig. 2;
Fig. 4 illustrates the section of Fig. 3 with the brewing unit in the closed position;
Fig. 5 illustrates an isometric view of the second component of the capsule guiding arrangement;
Fig. 6 illustrates a top view of the second component of the capsule guiding arrangement;
Fig. 7 illustrates a section according to lines VII-VII in Fig. 6;
Fig. 8 illustrates a front view according to line VIII-VIII in Fig. 6;
Fig. 9 illustrates an isometric view of the first component of the capsule guiding arrangement;
Fig. 10 illustrates a schematic of a beverage producing machine containing the brewing unit;
Figs. 11 to 18 illustrate a further embodiment of a brewing unit according to the invention in sectional views and isometric views and in different positions during a brewing cycle.

### DETAILED DESCRIPTION OF THE EMBODIMENTS

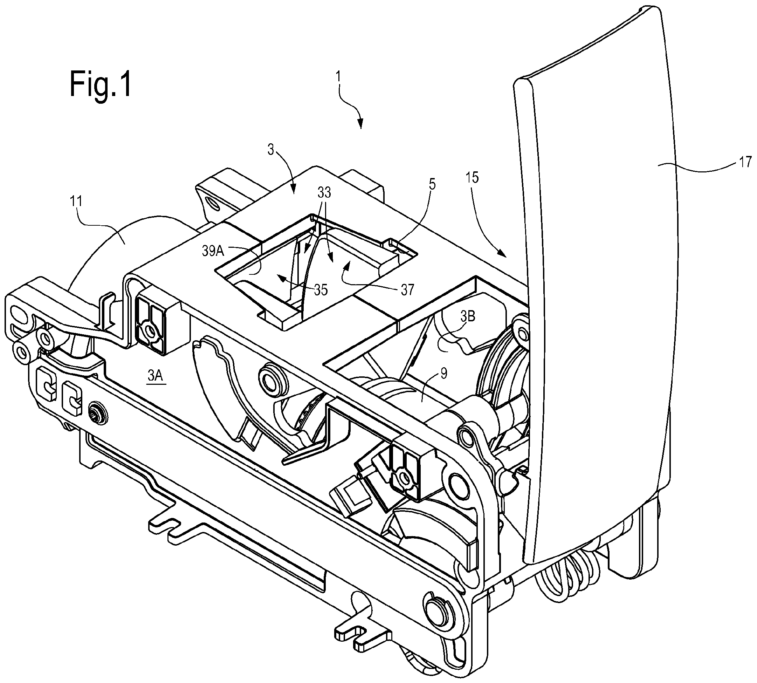

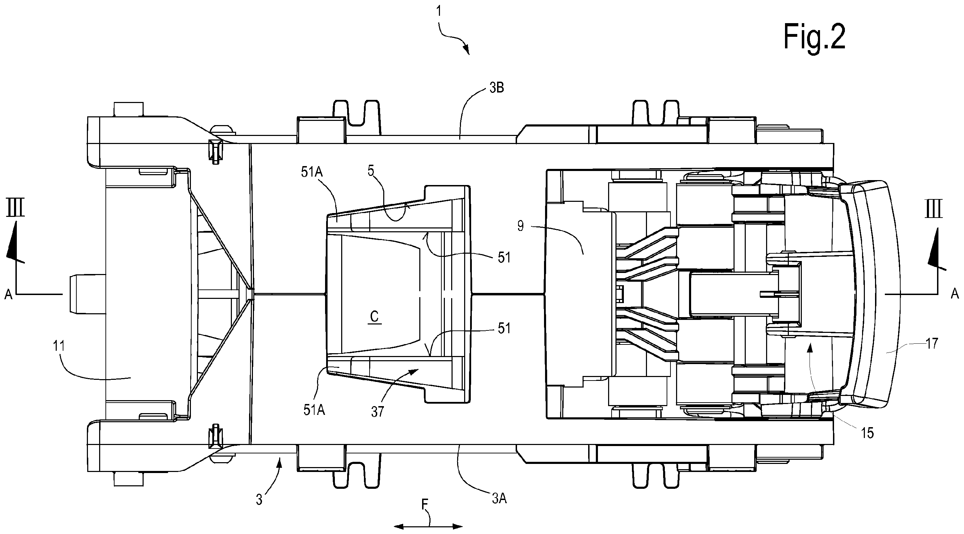

With initial reference to Figs. 1 to 4, an embodiment of a brewing unit 1 for a beverage producing machine will be described, which is designed for use with conically shaped pre-packaged capsules. It shall, however, be understood that the brewing unit disclosed herein can be used in combination with different kinds of pre-packed capsules, e.g. having the shape of a pod, with a centrally located circular rim. This may just require a different shape of the brewing chamber to conform with the shape of the capsule.

The brewing unit 1 has a supporting structure or frame 3, which can be stationarily mounted in a beverage producing machine and which supports elements forming a capsule manipulating system, for inserting the capsule in a brewing chamber and extracting the beverage therefrom by flowing hot and possibly pressurized water through the capsule.

The supporting structure 3 can comprise two side panels 3A, 3B, between which a brewing chamber is arranged. A capsule insertion aperture 5 can be provided in the top of the supporting structure 3. As will be explained in greater detail here below, capsules are introduced in the brewing unit 1 through the capsule insertion aperture 5 and are guided towards a capsule intermediate position, wherefrom the capsule is then moved into a brewing chamber and sealingly closed therein, such that hot, pressurized water can be injected through the capsule.

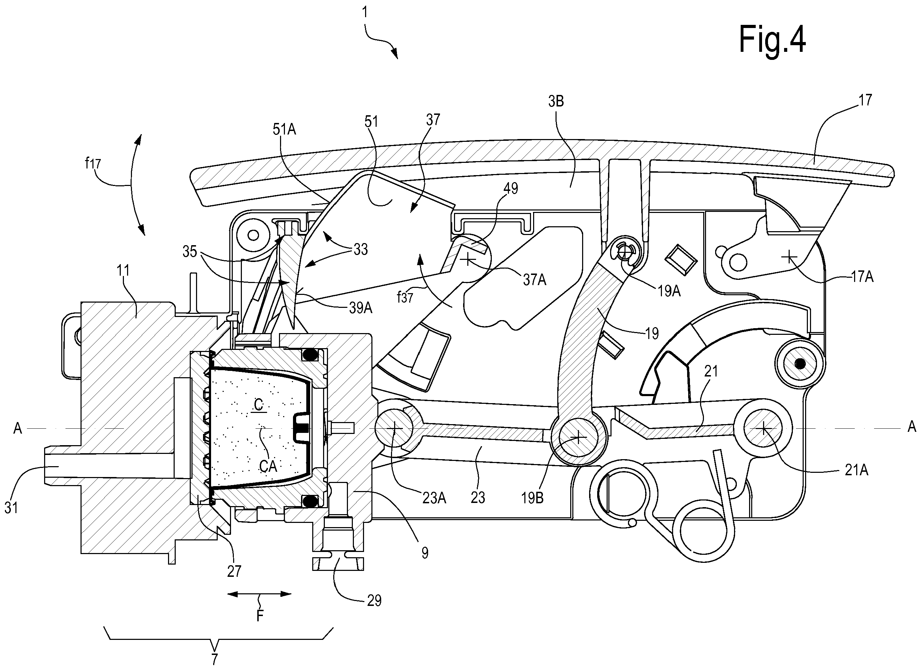

The supporting structure 3 supports a brewing chamber 7 (Fig.4), which is arranged between the side panels 3A, 3B of the supporting structure 3. The brewing chamber 7 can comprise a first brewing chamber portion 9 and a second brewing chamber portion 11. In the exemplary embodiment illustrated in the drawings, the first brewing chamber portion 9 is movable with respect to the supporting structure 3, while the second brewing chamber portion 11 is stationary with respect to the supporting structure 3. The first brewing chamber portion 9 moves with respect to the second brewing chamber portion 11 along an opening and closing direction represented by double arrow F. The opening and closing direction F can be approximately parallel to a longitudinal axis A-A of the brewing chamber.

In embodiments disclosed herein, the brewing unit 1 is designed for operating in a horizontal position, i.e. with the axis A-A oriented approximately in a horizontal direction.

The opening and closing movement of the brewing chamber 7 can be controlled by an actuation mechanism. In some embodiments, not shown, the actuation mechanism can include a rotary actuator, or else a linear actuator. For instance, the actuation mechanism can include a cylinder-piston actuator, or an electric or hydraulic rotary motor.

In the embodiment illustrated in the drawings, a manual actuation mechanism 15 is provided. The actuation mechanism 15 comprises a lever 17 hinged around an axis 17A to the supporting structure 3. A motion transmission member 19 is pivoted at 19A to the lever 17 and at 19B to a crank 21 and to a connecting rod 23. The crank 21 is hinged at 21A to the supporting structure 3, while the connecting rod 23 is hinged at 19A to the crank 21 and at 23A to the first brewing chamber portion 9. The movement of the lever 17 according to double arrow f17, controls the movement of the first brewing chamber portion 9 in the opening and closing direction F.

In the embodiment shown in the drawings, the first brewing chamber portion 9 forms a receptacle 25 configured for receiving a capsule C. The second brewing chamber portion 11 can comprise a perforated stud plate 27, co-acting with a top surface Cs of the capsule, for perforating the capsule and extracting the beverage therefrom.

The brewing chamber 7 has a hot water inlet and a beverage outlet. In the embodiment of Figs. 1-4 a hot water inlet 29 is fluidly coupled to the first brewing chamber portion 9. A beverage outlet 31 is fluidly coupled to the second brewing chamber portion 11.

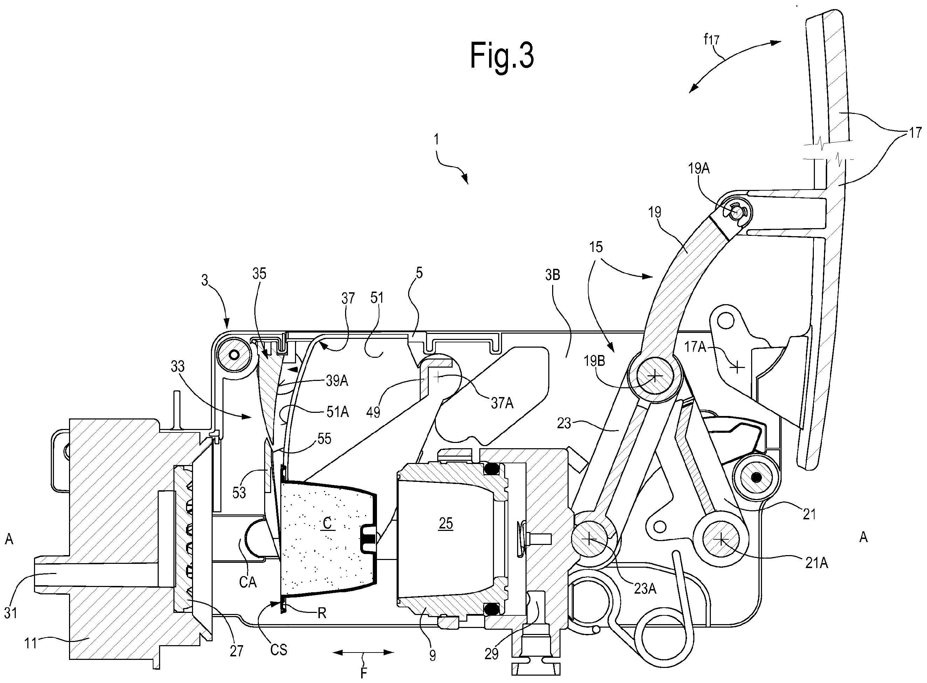

A capsule C is introduced in the brewing unit 1 through the capsule insertion aperture 5 and is guided downwards to a capsule intermediate position, shown in Fig.3. In the intermediate position the capsule C is retained between the first brewing chamber portion 9 and the second brewing chamber portion 11, which are in the open position. During the closing movement of the brewing chamber, from the position of Fig. 3 to the position of Fig. 4, the capsule C will be picked up by the first brewing chamber portion 9 and enters the receptacle 25, and then moves together with the first brewing chamber portion 9 towards the closed position (Fig. 4), wherein the capsule C is sealingly closed within the brewing chamber 7.

In order to guide the capsule C from the capsule insertion aperture 5 to the capsule intermediate position of Fig. 3, a capsule guiding arrangement 33 is arranged between the side panels 3A and 3B of the supporting structure 3. The capsule guiding arrangement 33 comprises a first component 35, which is stationarily mounted on the supporting structure 3. The capsule guiding arrangement 33 further comprises a second component 37, which is pivotally mounted on the stationary structure 3, such as to rotate around a pivoting axis 37A. The pivoting axis 37A is arranged between the top of the supporting structure 3, where the capsule insertion aperture 5 is located, and the brewing chamber 7.

The pivoting movement of the second component 37 of the capsule guiding arrangement 33 can be controlled in various ways. For instance, a linkage to the lever 17 could be provided, or an independent, separate actuator can be provided to rotate the second component 37 about the pivoting axis 37A. In advantageous embodiments, as shown in the attached drawings, a particularly simple arrangement is obtained if movement of the second component 37 is imparted directly by the first movable brewing chamber portion 9. The second component 37 can rest by its own weight on the first brewing chamber portion 9 and co-act therewith, such that a movement of the first movable brewing chamber portion 9 from the open position to towards the closed position (arrow F) will pivot the second component 37 from a first, capsule-receiving position (Fig.3) to a second, inoperative position (Fig.4). When the second component 37 is in the first, capsule-receiving position the brewing chamber 7 is open. When the brewing chamber 7 is closed, the second component 37 of the capsule guiding arrangement 33 is in the second, inoperative position.

A spring, not shown, can be further provided to bias the second component 37 of the capsule guiding arrangement 33 against the first brewing chamber portion 9, adding a resilient biasing force to the weight of the second component 37, thus ensuring continuous contact and co-action between the first brewing chamber portion 9 and the second component 37.

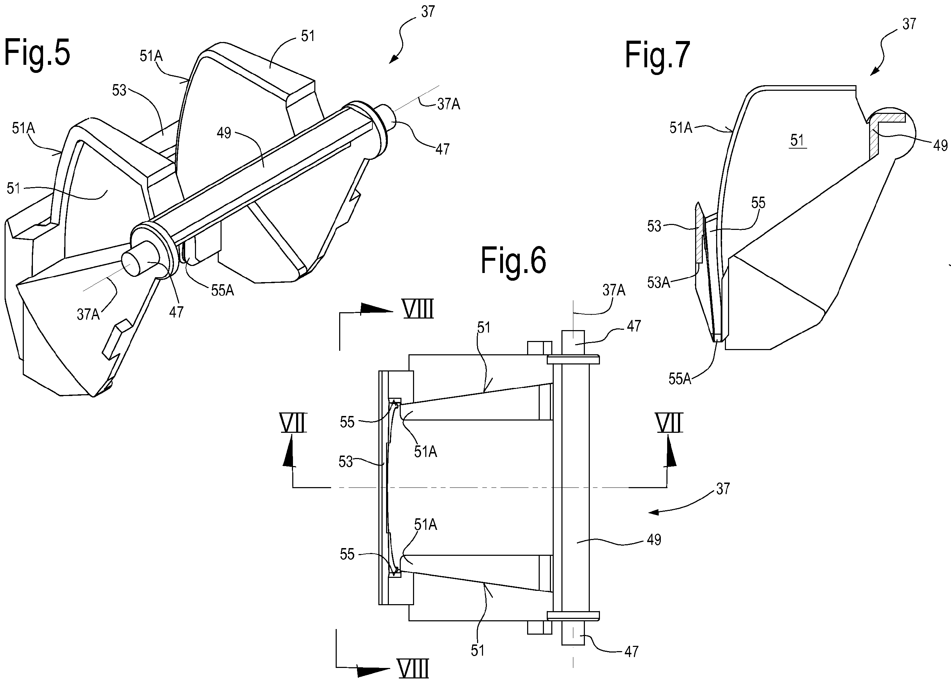

The structure of the first component 35 and of the second component 37 of the capsule guiding arrangement 33 can be best understood referring to Figs. 5 to 9.

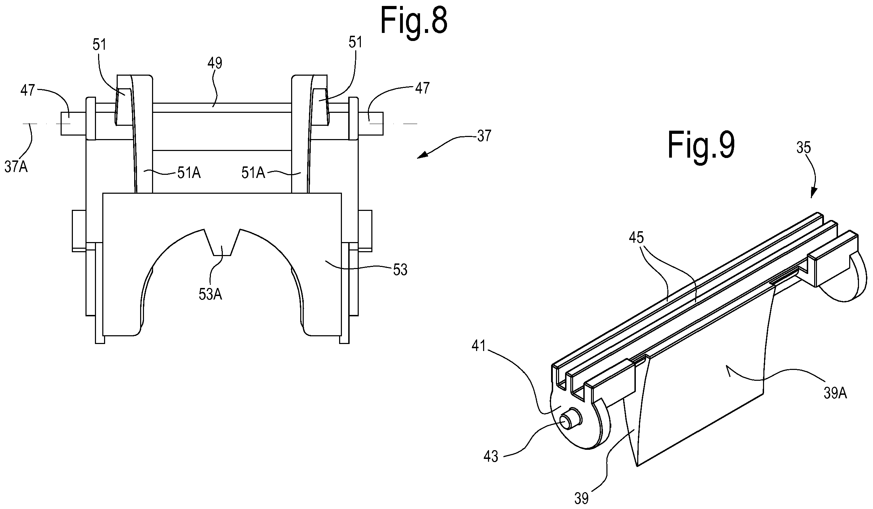

The first component 35 has a wedge-shaped projection 39 extending downwardly from a transverse beam 41, which can be mounted by means of pins 43 (only one of which is visible in Fig. 9) on the supporting structure 3. Fins 45 can be integrally formed with the transverse beam 41, which may co-act with the supporting structure 3 to angularly lock the first component 35 with respect to the supporting structure 3.

The wedge-shaped projection 39 has a first capsule contacting surface 39A, configured for contacting the top surface Cs of the capsule C, when this latter is introduced through the capsule insertion aperture 5 into the brewing unit 1. The first capsule contacting surface 39A can be curved and preferably slightly concave. In some embodiments, as can be best appreciated from Fig.9, the first capsule contacting surface 39A can be cylindrical. The first contacting surface 39A is oriented such as to face the pivoting axis 37A of the second component 37 of the capsule guiding arrangement 33.

The concavity of the first capsule contacting surface 39A provides smooth guidance of the capsule from the insertion aperture 5 towards the capsule intermediate position. The curvature of the concave contacting surface 39A acts upon the capsule forcing the latter to tilt, while moving along the capsule guiding arrangement, in a direction opposite the rotation direction which would be determined by the shape of the capsule and the weight distribution. In fact, without a correct guidance, the capsule would tend to rotate, under the weight of the content thereof, in a clock-wise direction (in the drawings), with the bottom of the capsule taking a lower position and the rim an upper position. The capsule guiding arrangement 33, prevents this spontaneous tilting motion. The concave curvature of the first capsule contacting surface 39A provides a gentle and smooth control over the capsule.

As best shown in Figs. 5-8, the second component 37 of the capsule guiding arrangement 33 comprises pins 47, by means of which the second component 37 is hinged to the two side panels 3A, 3B of the supporting structure. A transverse beam 49 extends parallel to the pivoting axis 37A and connects two lateral brackets 51, which therefore pivot around the pivoting axis 37A solidly with the transverse beam 49. Each lateral bracket 51 forms a respective one of two second capsule contacting surfaces labeled 51A. The second capsule contacting surfaces 51A are shaped such that when the second component 37 is in the capsule-receiving position (Fig.3), the second capsule contacting surfaces 51A extend from the capsule insertion aperture 5 downwards to the capsule intermediate position. The second capsule contacting surfaces 51A are oriented away from the pivoting axis 37A, i.e. they are facing the first component 35 of the capsule guiding arrangement 33.

In advantageous embodiments, the second capsule contacting surfaces 51A are curved, and can have a convex shape. When the second component 37 of the capsule guiding arrangement 33 is in the capsule-receiving position (Fig.3) a curved guiding channel is thus formed by the opposing first capsule contacting surface 39A and the second capsule contacting surfaces 51A.

The curved, convex shape of the second capsule contacting surfaces 51A, in combination with the curved, concave surface of the first capsule contacting surface 39A, contributes to a smooth and efficient guidance of the capsule in the movement thereof from the capsule insertion aperture towards the capsule intermediate position.

In some embodiments the second component 37 of the capsule guiding arrangement 33 can comprise a transverse capsule retention member 53 extending across the two brackets 51. The transverse capsule retention member 53 spans from one to the other of the second capsule contacting surfaces 51A and is distanced therefrom. A respective slot 55 is thus formed, between each second capsule contacting surface 51A and the transverse capsule retention member 53. The two slots 55 are distanced from one another and opposite to one another in a direction transverse to the closing and opening direction F. Thus, a capsule C introduced in the brewing unit 1 through the capsule insertion aperture 5 will slide along the second capsule contacting surfaces 51A and finally reach the capsule intermediate position where it will be retained in the slots 55. More precisely, the capsule C is usually provided with a rim R surrounding the top surface Cs of the capsule. The rim will move in sliding contact with the second capsule contacting surfaces 51A and, once the capsule intermediate position (Fig.3) has been reached the capsule rim R will be retained at diametrically opposite locations in the slots 55.

According to some embodiments, the transverse capsule retention member 53 can have a curved bottom edge, wherefrom an appendage 53A can project in a downward direction. The appendage 53A can co-act with the top surface Cs of the capsule C while the latter moves from the capsule insertion aperture 5 towards the capsule intermediate position of Fig. 3.

Each slot 55 can have a bottom edge 55A which is oriented towards the center line of the brewing unit 1, i.e. toward the plane of the sectional view of Fig. 1. The two edges 55A of the two slots 55 are oriented one towards the other and form a sort of bottom closure of the respective slots 55, which provides a support for the rim R of the capsule C when the latter is in the capsule intermediate position of Fig 3.

As can be best understood from Fig.3, when the second component 37 of the capsule guiding arrangement 33 is in the capsule-receiving position of Fig. 3, the transverse capsule retention member 53 is arranged underneath the wedge-shaped projection 39 of the first component 35 of the capsule guiding arrangement 33. Thus, the first component 35 is located between the capsule insertion aperture 5 and the transverse capsule retention member 53.

The operation of the brewing unit 1 is clear from the above detailed description and can be summarized as follows. When the brewing chamber 7 is in the open position (Fig.3), a capsule C can be introduced through the capsule insertion aperture 5 and caused to fall by gravity within the brewing unit 1. The distance between the second capsule contacting surfaces 51A is such that they engage the rim R of the capsule C in two diametrically opposite positions. The top surface Cs of the capsule C contacts the first capsule contacting surface 39A of the first component 35 of the capsule guiding arrangement 33. During the motion of the capsule towards the capsule intermediate position, the top surface Cs of the capsule C will slide along the first capsule contacting surface 39A and then along the transverse capsule retention member 53, while the rim R of the capsule R will enter the slots 55 and be guided there along until the capsule intermediate position of Fig. 3 is reached. During this movement, the capsule is rotated, due to the curved shape of the first capsule contacting surface 39A and of the second capsule contacting surfaces 51A, such that the longitudinal axis (CA, Fig.3) of the capsule C, i.e. the axis orthogonal to the top surface Cs thereof, will finally achieve a substantially horizontal position, i.e. a position substantially parallel to and coincident with the axis A-A of the brewing chamber 7 and to the direction of the opening and closing movement (arrow F) of the brewing chamber portion 9.

When the brewing chamber 7 is moved towards the closed position (Fig.4) by acting upon the lever 17 of the actuation mechanism 15, the first, movable brewing chamber portion 9 pushes against the second component 37 of the capsule guiding arrangement 33 and rotates the second component 37 around the pivoting axis 37A towards the second, inoperative position of Fig. 4, clearing of the trajectory of motion of the first brewing chamber portion 9. The pivoting movement is represented by arrow f37 in Fig.4. The first brewing chamber portion 9 is thus free to move against the second brewing chamber portion 11. During the translation movement according to arrow F of the first brewing chamber portion 9, the latter engages the bottom of the capsule C, which gradually enters the receptacle 25 and is finally removed from the second component 37 of the capsule guiding arrangement 33 and pushed with the top surface Cs thereof against the perforated stud plate 27 of the second brewing chamber portion 11.

The shape and dimensions of the first and second components 35, 37 of the capsule guiding arrangement 33 and the position of the pivoting axis 37A are such that, while pivotally moving towards the second, inoperative position, the transverse capsule retention member 53 rotates around the first component 35 of the capsule guiding arrangement 33 on the side opposite the first capsule contacting surface 39A. During the pivoting movement of the second component 37 of the capsule guiding arrangement 33 the rim R of the capsule C can be caused to forcedly move outside the slots 55, by slightly bending the rim, if needed. In other embodiments, the bottom edges 55A of the slots 55 an be made resilient and sufficiently pliable to deform thus allowing the rim R to be removed from the bottom of the slots, while the capsule C is engaged in the receptacle 25 of the first brewing chamber portion 9. The capsule is prevented from lifting together with the tilting second component 37 since the bottom of the capsule is engaged in the receptacle 25. The bottom of the capsule abuts against the upper area of the inner surface of receptacle 25, which applies a downwardly oriented retention force onto the capsule, which avoids lifting of the capsule.

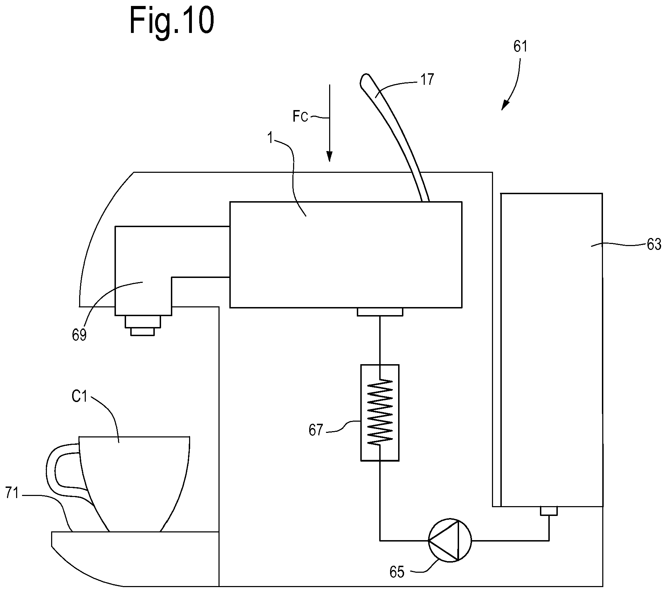

The brewing unit 1 can be arranged in a beverage producing machine, such as a coffee machine or the like. A beverage producing machine 61 containing a brewing unit 1 is schematically shown in Fig. 10. The capsule insertion aperture 5 is accessible from the top of the beverage producing machine 61, for inserting a capsule C therein according to arrow Fc. The brewing unit 1 can be fluidly coupled to a water tank 63 through a water pump 65 and a water heater 67. Reference number 69 designates a beverage dispensing nozzle for dispensing the beverage in a cup C1, which can be placed on a drip tray 71. The beverage producing machine 61 can be provided with a plurality of additional devices or components, which are known to those skilled in the art and which are not disclosed in detail herein.

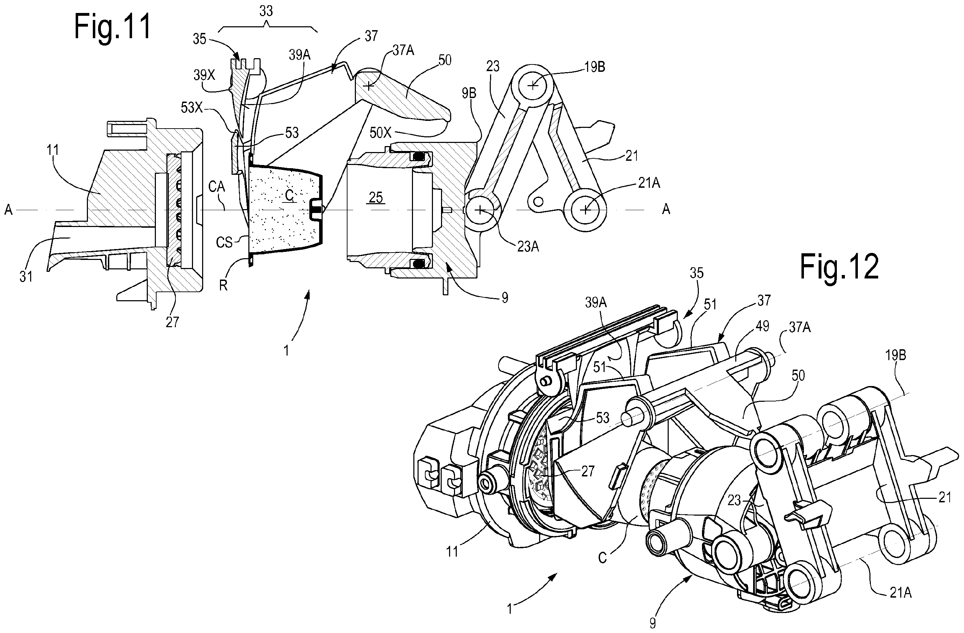

A further embodiment of a brewing unit according to the invention is illustrated in Figs. 11 to 18. More specifically, Figs. 11, 13, 15 and 17 illustrate the brewing unit in four different operating positions and in a sectional view according to a vertical plane containing the axis of the brewing unit. Figs. 12, 14, 16 and 18 illustrate the corresponding isometric views of the brewing unit in the same four positions. The supporting structure or frame 3 as well as the lever 17 have been omitted from Figs. 11-18 for the sake of clarity. The same reference numbers designate the same or corresponding parts, components and elements as already described above in connection with Figs. 1 to 9. These parts will not be described again.

In the embodiment of Figs. 11-18 the second component 37 is provided with an arm 50 which can project from the transverse beam 49 towards the movable brewing chamber portion 9 and can be provided with a toot 50X at the free end thereof. The toot 50X co-acts with a back edge 9B of the movable brewing chamber portion 9 as will be described herein after.

The capsule retention member 53 is provided with an indentation 53X which co-acts with a catch 39X on the wedge-shaped projection 39 and more specifically on the surface of this latter opposite the capsule contacting surface 39A. In other embodiments the indentation can be provided on the wedge-shaped projection 39, while the catch can be arranged on the capsule retention member 53. The catch and indentation arrangement is designed such that the second component 37 and the first component 35 of the capsule guiding arrangement 33 can be temporarily locked to one another in a releasable manner. In other embodiments a different reversible latching mechanism can be provided between the first and second components 35, 37. Any snap connection members, friction connection members or other reversible coupling members can be provided, which can be activated and de-activated by forcedly moving one of the components 35, 37 with respect to the other.

In yet further embodiments, not shown, the second component 37 can be configured and arranged to be snap-engaged or otherwise locked in its inoperative position by co-action with a different part of the brewing unit, for instance with the supporting structure 3. In some embodiments, the movable, second component 37 of the capsule guiding arrangement 33 can be provided with latches, teeth, projections, appendages or similar members, co-acting with indentations or any other engagement member mounted on the supporting structure. What matters is that the latching mechanism, whatever its structure, is reversible, i.e. it will release the second component 37 of the capsule guiding arrangement 33 when required, e.g. when this latter is forcedly pushed out of engagement with the latching mechanism by co-action with the first, movable brewing chamber portion 9.

The brewing unit shown in Figs. 11 to 18 operates as follows.

In Figs. 11, 12 the brewing unit 1 is in the open position. A capsule C has been introduced in the brewing unit 1 and is temporarily retained in the intermediate position, with the capsule rim R engaged by the second component 37 of the capsule guiding arrangement 33. The first, movable brewing chamber portion 9 is distanced from the second, stationary brewing chamber portion 11.

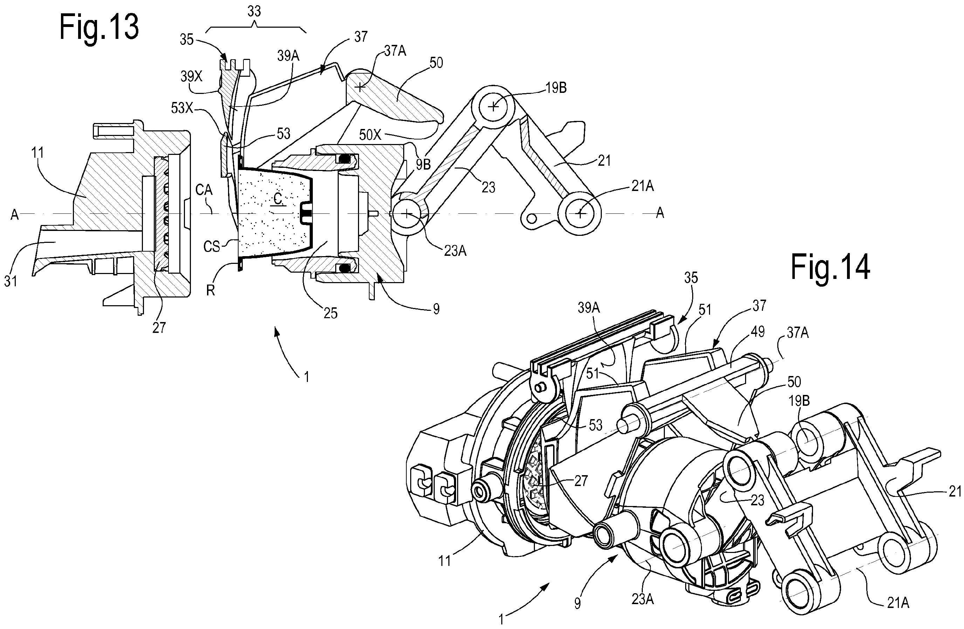

In Figs. 13, 14 the first, movable brewing chamber portion 9 starts moving (arrow F) towards the second, stationary brewing chamber portion 11, under the action of an actuating member, e.g. the lever 17 or any other suitable means, such as an electric or hydraulic actuator, acting upon the crank and connecting rod system 21, 23 or other mechanical connection system, which drivingly connects the actuating member to the first, movable brewing chamber portion 9. As shown in Fig. 13, during the movement according to arrow F, the first, movable brewing chamber portion 9 starts engaging the back of the capsule C.

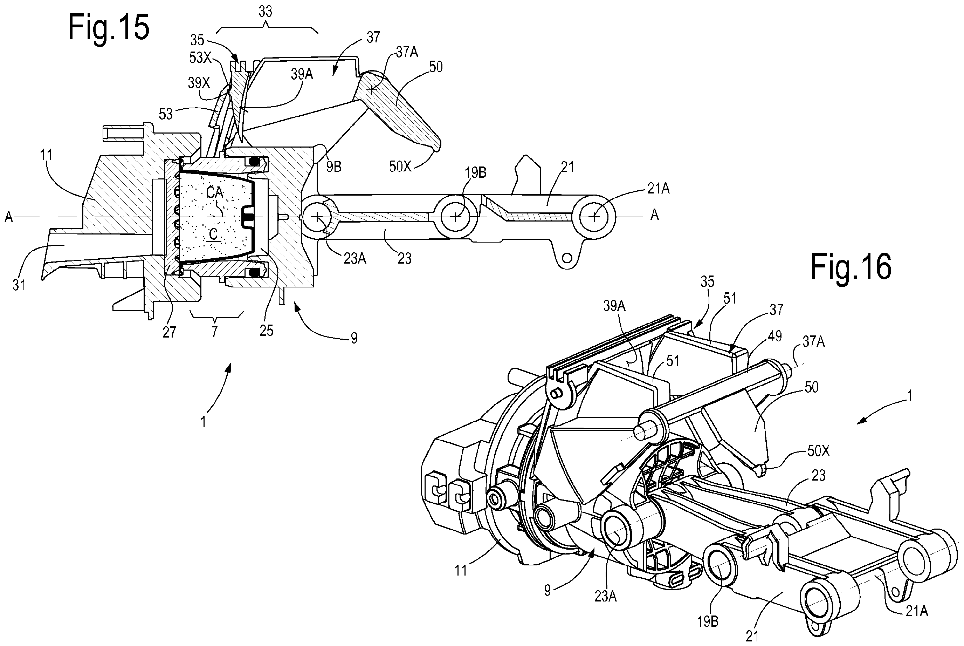

By further moving the first, movable brewing chamber portion 9 towards the second, stationary brewing chamber portion 11 according to arrow F, the second component 37 will be pivotally lifted towards the inoperative position, freeing the capsule from the second component 37 and moving said capsule into sealing engagement with the first and second brewing chamber portions 9, 11, as shown in Figs 15, 16. The capsule rim R will be finally sealingly engaged between an edge surrounding the receptacle 25 and the stud plate 27.

The pivoting movement of the second component 37 of the capsule guiding arrangement 33 caused by the co-action thereof with the second, movable brewing chamber portion 9 brings the indentation 53X of the capsule retention member 53 into snap-engagement with the catch 35X of the first component 35 of the capsule guiding arrangement 33. Engagement is facilitated by resilient, flexural deformation of the capsule retention member 53, for instance.

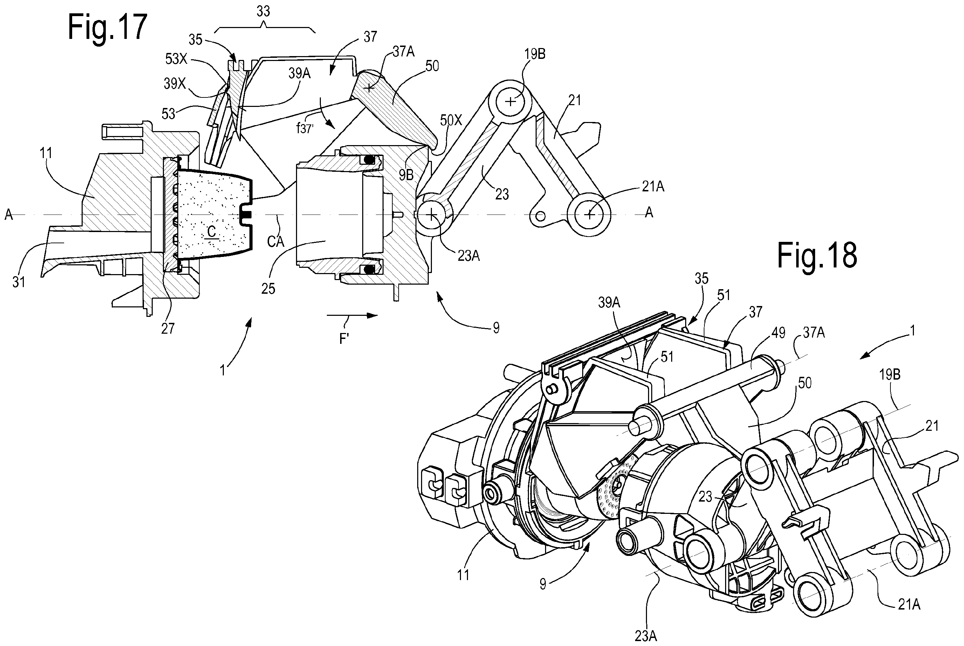

Hot, pressurized water can now flow through the capsule C to produce the beverage, which is dispensed from the beverage outlet 31. Once the beverage dispensing step has been completed, opening of the brewing chamber 7 is started, by distancing the first, movable brewing chamber portion 9 according to arrow F' (Fig.17). The second component 37 of the capsule guiding arrangement 33 remains temporarily engaged with the first component 35, such that the second component 37 does not interact with either the first, movable brewing chamber portion 9 or the spent capsule C. Once the position of Fig. 17 has been reached, the back edge 9B of the first, movable brewing chamber portion 9 gets into engagement with the tooth 50X, such that further movement according to arrow F' of the first, movable brewing chamber portion 9 will force the second component 37 to rotate about the pivoting axis 37A according to arrow f37', forcing the capsule retention member 53 out of latch-engagement with the first component 35 of the capsule guiding arrangement 33. During this downwards pivoting movement the second component 37 of the capsule guiding arrangement 33 will push the spent capsule C away from the stud plate 27, whereto the spent capsule C can accidentally adhere after brewing. A resilient pusher provided in the bottom of the receptacle 25 (not shown in detail) can in turn prevent the spent capsule C from adhering to the first, movable brewing chamber portion 9.

While in the embodiment illustrated in Figs. 11-18 an arm 50 and a tooth 50X co-acting with the first, movable brewing chamber portion 9 is provided for disengaging the second component 37 from the first component 35 of the capsule guiding arrangement 33, a different unlatching mechanism can be provided for forcedly releasing the second component 37 from the first component 35 of the capsule guiding arrangement 33 and safely removing a spent capsule C from the stud plate 27. For instance, resilient teeth, or any other mechanical coupling means can be provided, which temporarily connect the first, movable brewing chamber portion 9 to the second component 37 of the capsule guiding arrangement 33, such that the second component 37 is disengaged from the first component 35 and forcedly brought back to the starting position thereof, where a new capsule can be received, and such that during the forced back movement the second component 37 will push any spent capsule C away from the second, stationary brewing chamber portion 11.

In yet further embodiments (not shown) a mechanical connection between the actuating member (e.g. the lever 17) and the second component 37 can be provided, to force this latter from the inoperative position back into the capsule-receiving position.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the scope of the appended claims.

## Claims

1. A brewing unit (1) for preparing beverages from pre-packed capsules (C), comprising:
a supporting structure (3);
a brewing chamber (7) supported by said supporting structure (3) and comprising a first brewing chamber portion (9) and a second brewing chamber portion (11), movable one with respect to the other along an opening and closing direction (F) from an open position to a closed position and vice-versa;
an actuation mechanism (15) for closing and opening the brewing chamber (7);
a capsule insertion aperture (5);
a capsule guiding arrangement (33) between the capsule insertion aperture (5) and a capsule intermediate position, comprising a first component (35) and a second component (37), the second component being pivotally mounted on the stationary structure (3) around a pivoting axis (37A) approximately orthogonal the opening and closing direction (F);
**characterized in that**: the first component (35) of the capsule guiding arrangement (33) is stationarily mounted on the supporting structure (3) and comprises a first capsule contacting surface (39A), configured and arranged for engaging a top surface (Cs) of a capsule (C) which is introduced in the brewing unit (1); and the second component (37) of the capsule guiding arrangement (33) comprises second capsule contacting surfaces (51A), configured and arranged for engaging a capsule rim (R) surrounding the capsule (C), on a rim surface opposite said top surface (Cs).

2. The brewing unit (1) of claim 1, wherein the second component (37) of the capsule guiding arrangement (33) is movable between: a first, capsule-receiving position, in which the second component (37) is located between the first brewing chamber portion (9) and the second brewing chamber portion (11), the brewing chamber (7) being in the open position; and a second, inoperative position, clear of a trajectory of motion of the first brewing chamber portion (9) or the second brewing chamber portion (11), the brewing chamber (7) being in the closed position.

3. The brewing unit (1) of claim 2, wherein the second component (37) of the capsule guiding arrangement (33) co-acts with one of the first brewing chamber portion (9) and second brewing chamber portion (11), such that the second component (37) is pivotally moved from the first, capsule-receiving position to the second, inoperative position by the brewing chamber portion (9) co-acting therewith, when the brewing chamber portion (9) moves from the open position to the closed position of the brewing chamber (7).

4. The brewing unit (1) of claim 2 or 3, further comprising a latching mechanism (53X, 39X) for locking the second component (37) of the capsule guiding arrangement (35) in the second inoperative position, and an unlatching mechanism (50) for releasing the second component (37) from the inoperative position and forcing the second component (37) to move back into the capsule-receiving position.

5. The brewing unit (1) of any one of the preceding claims, wherein: the first capsule contacting surface (39A) is oriented towards the pivoting axis (37A) of the second component (37) of the capsule guiding arrangement (33).

6. The brewing unit (1) of any one of the preceding claims, wherein the second capsule contacting surfaces (51A) are distanced from one another; and wherein the first capsule contacting surface (39A) extends between the second capsule contacting surfaces (51A), such that a capsule (C) introduced through the capsule insertion aperture (5) moves in surface engagement with the first capsule contacting surface (39A) and the second capsule contacting surfaces (51A) when moving from the capsule insertion aperture (5) towards the capsule intermediate position.

7. The brewing unit (1) of any one of the preceding claims, wherein the second capsule contacting surfaces (51A) extend from the capsule insertion aperture (5) towards the capsule intermediate position when the brewing chamber (7) is in the open position.

8. The brewing unit (1) of any one of the preceding claims, wherein the second component (37) of the capsule guiding arrangement (33) further comprises a transverse capsule retention member (53) arranged at a distance from the second capsule contacting surfaces (51A) and extending from one to the other of said second capsule contacting surfaces.

9. The brewing unit (1) of claim 8, wherein when the brewing chamber (7) is in the open position, the transverse capsule retention member (53) is positioned adjacent the first component (35) of the capsule guiding arrangement (33), the first component (35) of the capsule guiding arrangement (33) being located between the capsule insertion aperture (5) and the transverse capsule retention member (53).

10. The brewing unit (1) of any one of the preceding claims, wherein the first capsule contacting surface (39A) has a concave shape, with a concavity facing the second component (37) of the capsule guiding arrangement (33).

11. The brewing unit (1) of any one of the preceding claims, wherein the second capsule contacting surfaces (51A) have a convex shape, with a convexity facing the first component (35) of the capsule guiding arrangement (33).

12. The brewing unit (1) of any one of the preceding claims, wherein the second component (37) of the capsule guiding arrangement (33) comprises opposed capsule engaging slots (55), configured and arranged for engaging a capsule rim (R) at diametrically opposed positions thereof.

13. The brewing unit (1) of any one of the preceding claims, wherein the first brewing chamber portion (9) is drivingly coupled to the actuation mechanism (15) and is movable under the control of the actuating mechanism (15) in the opening and closing direction (F) with respect to the supporting structure (3).

14. The brewing unit (1) of claim 13, wherein the second brewing chamber portion (11) is stationary with respect to the supporting structure (3).

15. The brewing unit (1) of claim 13 or 14, wherein the first brewing chamber portion (9) comprises a receptacle (25), configured for receiving and supporting the capsule (C) therein, when the first brewing chamber portion (9) moves from the open position to the closed position.

16. A beverage producing machine (61) comprising a brewing unit (1) according to any one of the preceding claims.

## Patentansprüche

1. Brüheinheit (1) zum Bereiten von Getränken aus vorgepackten Kapseln (C), umfassend:
eine Stützstruktur (3);
eine Brühkammer (7), die durch die Stützstruktur (3) gestützt ist und einen ersten Brühkammerteil (9) und einen zweiten Brühkammerteil (11) umfasst, wobei die eine bezüglich der anderen entlang einer Öffnungs- und Verschlussrichtung (F) von einer offenen Position zu einer geschlossenen Position und umgekehrt beweglich ist;
einen Betätigungsmechanismus (15) zum Schließen und Öffnen der Brühkammer (7);
eine Kapseleinsatzöffnung (5);
eine Kapselführungsanordnung (33) zwischen der Kapseleinsatzöffnung (5) und einer Kapselzwischenposition, umfassend eine erste Komponente (35) und eine zweite Komponente (37), wobei die zweite Komponente drehbar an der feststehenden Struktur (3) um eine Drehachse (37A) ungefähr orthogonal zur Öffnungs- und Verschlussrichtung (F) befestigt ist;
**dadurch gekennzeichnet, dass**: die erste Komponente (35) der Kapselführungsanordnung (33) feststehend an der Stützstruktur (3) befestigt ist und eine erste Kapselkontaktfläche (39A) umfasst, die zum Eingreifen an einer Oberfläche (Cs) einer Kapsel (C), die in die Brüheinheit (1) eingesetzt wird, konfiguriert und angeordnet ist; und die zweite Komponente (37) der Kapselführungsanordnung (33) zweite Kapselkontaktflächen (51A) umfasst, die zum Eingreifen an einem Kapselrand (R), der die Kapsel (C) umgibt, an einer Randfläche gegenüber der Oberfläche (Cs) konfiguriert und angeordnet sind.

2. Brüheinheit (1) nach Anspruch 1, wobei die zweite Komponente (37) der Kapselführungsanordnung (33) zwischen: einer ersten, eine Kapsel aufnehmenden Position, in welcher sich die zweite Komponente (37) zwischen dem ersten Brühkammerteil (9) und dem zweiten Brühkammerteil (11) befindet, wobei sich die Brühkammer (7) in der offenen Position befindet; und einer zweiten, funktionsunfähigen Position, die außerhalb einer Bewegungsbahn des ersten Brühkammerteils (9) oder des zweiten Brühkammerteils (11) liegt, wobei sich die Brühkammer (7) in der geschlossenen Position befindet, beweglich ist.

3. Brüheinheit (1) nach Anspruch 2, wobei die zweite Komponente (37) der Kapselführungsanordnung (33) zusammen mit einem des ersten Brühkammerteils (9) und des zweiten Brühkammerteils (11) tätig ist, sodass die zweite Komponente (37) drehend von der ersten, die Kapsel aufnehmenden Position bis zu der zweiten, funktionsunfähigen Position durch den Brühkammerteil (9), der mit dieser tätig ist, bewegt wird, wenn sich der Brühkammerteil (9) von der offenen Position zu der geschlossenen Position der Brühkammer (7) bewegt.

4. Brüheinheit (1) nach Anspruch 2 oder 3, weiter umfassend einen Verriegelungsmechanismus (53X, 39X) zum Verriegeln der zweiten Komponente (37) der Kapselführungsanordnung (35) in der zweiten, funktionsunfähigen Position, und einen Entriegelungsmechanismus (50) zum Entriegeln der zweiten Komponente (37) aus der funktionsunfähigen Position, wodurch sich die zweite Komponente (37) zwangsweise in die Kapsel aufnehmende Position zurückbewegt.

5. Brüheinheit (1) nach einem der vorstehenden Ansprüche, wobei: die erste Kapselkontaktfläche (39A) in Richtung der Drehachse (37A) der zweiten Komponente (37) der Kapselführungsanordnung (33) orientiert ist.

6. Brüheinheit (1) nach einem der vorstehenden Ansprüche, wobei die zweiten Kapselkontaktflächen (51A) voneinander beabstandet sind; und wobei sich die erste Kapselkontaktfläche (39A) zwischen den zweiten Kapselkontaktflächen (51A) erstreckt, sodass sich eine Kapsel (C), die durch die Kapseleinsatzöffnung (5) eingesetzt wird, in einen Oberflächeneingriff mit der ersten Kapselkontaktfläche (39A) und den zweiten Kapselkontaktflächen (51A) bewegt, wenn sich diese von der Kapseleinsatzöffnung (5) in Richtung der Kapselzwischenposition bewegt.

7. Brüheinheit (1) nach einem der vorstehenden Ansprüche, wobei sich die zweiten Kapselkontaktflächen (51A) von der Kapseleinsatzöffnung (5) in Richtung der Kapselzwischenposition erstrecken, wenn sich die Brühkammer (7) in der offenen Position befindet.

8. Brüheinheit (1) nach einem der vorstehenden Ansprüche, wobei die zweite Komponente (37) der Kapselführungsanordnung (33) weiter ein transversales Kapselrückhalteelement (53) umfasst, das in einem Abstand von den zweiten Kapselkontaktflächen (51A) angeordnet ist und sich von der einen zu der anderen der zweiten Kapselkontaktflächen erstreckt.

9. Brüheinheit (1) nach Anspruch 8, wobei, wenn sich die Brühkammer (7) in der offenen Position befindet, das transversale Kapselrückhalteelement (53) benachbart der ersten Komponente (35) der Kapselführungsanordnung (33) positioniert ist, wobei sich die erste Komponente (35) der Kapselführungsanordnung (33) zwischen der Kapseleinsatzöffnung (5) und dem transversalen Kapselrückhalteelement (53) befindet.

10. Brüheinheit (1) nach einem der vorstehenden Ansprüche, wobei die erste Kapselkontaktfläche (39A) eine konkave Form aufweist, wobei eine Konkavität der zweiten Komponente (37) der Kapselführungsanordnung (33) gegenüberliegt.

11. Brüheinheit (1) nach einem der vorstehenden Ansprüche, wobei die zweiten Kapselkontaktflächen (51A) eine konvexe Form aufweisen, wobei eine Konvexität der ersten Komponente (35) der Kapselführungsanordnung (33) gegenüberliegt.

12. Brüheinheit (1) nach einem der vorstehenden Ansprüche, wobei die zweite Komponente (37) der der Kapselführungsanordnung (33) gegenüberliegende Kapseleingriffsschlitze (55) umfasst, die zum Eingreifen eines Kapselrandes (R) an diametrisch gegenüberliegenden Positionen davon konfiguriert und angeordnet sind.

13. Brüheinheit (1) nach einem der vorstehenden Ansprüche, wobei der erste Brühkammerteil (9) antriebsmäßig an den Betätigungsmechanismus (15) gekoppelt ist und unter der Steuerung des Betätigungsmechanismus (15) in die Öffnungs- und Verschlussrichtung (F) bezüglich der Stützstruktur (3) beweglich ist.

14. Brüheinheit (1) nach Anspruch 13, wobei der zweite Brühkammerteil (11) bezüglich der Stützstruktur (3) feststehend ist.

15. Brüheinheit (1) nach Anspruch 13 oder 14, wobei der erste Brühkammerteil (9) einen Behälter (25) zum Aufnehmen und Stützen der darin befindlichen Kapsel (C) umfasst, wenn sich der erste Brühkammerteil (9) von der offenen Position zu der geschlossenen Position bewegt.

16. Getränkezubereitungsmaschine (61), umfassend eine Brüheinheit (1) nach einem der vorstehenden Ansprüche.

## Revendications

1. Unité de brassage (1) pour la préparation de boissons à partir de capsules pré-conditionnées (C), comprenant :
une structure de support (3) ;
une chambre de brassage (7) supportée par ladite structure de support (3) et comprenant une première portion de chambre de brassage (9) et une deuxième portion de chambre de brassage (11), mobiles l'une par rapport à l'autre le long d'une direction d'ouverture et de fermeture (F) d'une position ouverte à une position fermée et inversement ;
un mécanisme d'actionnement (15) pour la fermeture et l'ouverture de la chambre de brassage (7) ;
une ouverture d'insertion de capsule (5) ;
un agencement de guidage de capsule (33) entre l'ouverture d'insertion de capsule (5) et une position intermédiaire de capsule, comprenant un premier composant (35) et un deuxième composant (37), le deuxième composant étant monté de manière pivotante sur la structure fixe (3) autour d'un axe de pivotement (37A) approximativement orthogonal à la direction d'ouverture et de fermeture (F) ;
**caractérisée en ce que** : le premier composant (35) de l'agencement de guidage de capsule (33) est monté de manière fixe sur la structure de support (3) et comprend une première surface de contact de capsule (39A), conçue et agencée pour venir en prise avec une surface supérieure (Cs) d'une capsule (C) qui est introduite dans l'unité de brassage (1) ; et le deuxième composant (37) de l'agencement de guidage de capsule (33) comprend des deuxièmes surfaces de contact de capsule (51A), conçues et agencées pour venir en prise avec un rebord de capsule (R) entourant la capsule (C), sur une surface de rebord opposée à ladite surface supérieure (Cs).

2. Unité de brassage (1) selon la revendication 1, dans laquelle le deuxième composant (37) de l'agencement de guidage de capsule (33) est mobile entre : une première position de réception de capsule, dans laquelle le deuxième composant (37) est situé entre la première portion de chambre de brassage (9) et la deuxième portion de chambre de brassage (11), la chambre de brassage (7) étant dans la position ouverte ; et une deuxième position non fonctionnelle, sans trajectoire de déplacement de la première portion de chambre de brassage (9) ou de la deuxième portion de chambre de brassage (11), la chambre de brassage (7) étant dans la position fermée.

3. Unité de brassage (1) selon la revendication 2, dans laquelle le deuxième composant (37) de l'agencement de guidage de capsule (33) co-agit avec une parmi la première portion de chambre de brassage (9) et la deuxième portion de chambre de brassage (11), de sorte que le deuxième composant (37) est déplacé de manière pivotante de la première position de réception de capsule à la deuxième position non fonctionnelle par la portion de chambre de brassage (9) co-agissant avec celui-ci, lorsque la portion de chambre de brassage (9) se déplace de la position ouverte à la position fermée de la chambre de brassage (7).

4. Unité de brassage (1) selon la revendication 2 ou 3, comprenant en outre un mécanisme d'enclenchement (53X, 39X) pour verrouiller le deuxième composant (37) de l'agencement de guidage de capsule (35) dans la deuxième position non fonctionnelle, et un mécanisme de déverrouillage (50) pour libérer le deuxième composant (37) de la position non fonctionnelle et forcer le deuxième composant (37) à revenir dans la position de réception de capsule.

5. Unité de brassage (1) selon l'une quelconque des revendications précédentes, dans laquelle : la première surface de contact de capsule (39A) est orientée vers l'axe de pivotement (37A) du deuxième composant (37) de l'agencement de guidage de capsule (33).

6. Unité de brassage (1) selon l'une quelconque des revendications précédentes, dans laquelle les deuxièmes surfaces de contact de capsule (51A) sont espacées l'une de l'autre ; et dans laquelle la première surface de contact de capsule (39A) s'étend entre les deuxièmes surfaces de contact de capsule (51A), de sorte qu'une capsule (C) introduite à travers l'ouverture d'insertion de capsule (5) se déplace en prise de surface avec la première surface de contact de capsule (39A) et les deuxièmes surfaces de contact de capsule (51A) lors du déplacement de l'ouverture d'insertion de capsule (5) vers la position intermédiaire de capsule.

7. Unité de brassage (1) selon l'une quelconque des revendications précédentes, dans laquelle les deuxièmes surfaces de contact de capsule (51A) s'étendent de l'ouverture d'insertion de capsule (5) vers la position intermédiaire de capsule lorsque la chambre de brassage (7) est dans la position ouverte.

8. Unité de brassage (1) selon l'une quelconque des revendications précédentes, dans laquelle le deuxième composant (37) de l'agencement de guidage de capsule (33) comprend en outre un élément de retenue de capsule transversal (53) agencé à une distance des deuxièmes surfaces de contact de capsule (51A) et s'étendant de l'une à l'autre desdites deuxièmes surfaces de contact de capsule.

9. Unité de brassage (1) selon la revendication 8, dans laquelle lorsque la chambre de brassage (7) est dans la position ouverte, l'élément de retenue de capsule transversal (53) est positionné de manière adjacente au premier composant (35) de l'agencement de guidage de capsule (33), le premier composant (35) de l'agencement de guidage de capsule (33) étant situé entre l'ouverture d'insertion de capsule (5) et l'élément de retenue de capsule transversal (53).

10. Unité de brassage (1) selon l'une quelconque des revendications précédentes, dans laquelle la première surface de contact de capsule (39A) a une forme concave, avec une concavité faisant face au deuxième composant (37) de l'agencement de guidage de capsule (33).

11. Unité de brassage (1) selon l'une quelconque des revendications précédentes, dans laquelle les deuxièmes surfaces de contact de capsule (51A) ont une forme convexe, avec une convexité faisant face au premier composant (35) de l'agencement de guidage de capsule (33).

12. Unité de brassage (1) selon l'une quelconque des revendications précédentes, dans laquelle le deuxième composant (37) de l'agencement de guidage de capsule (33) comprend des fentes de mise en prise de capsule opposées (55), conçues et agencées pour venir en prise avec un rebord de capsule (R) à des positions diamétralement opposées de celui-ci.

13. Unité de brassage (1) selon l'une quelconque des revendications précédentes, dans laquelle la première portion de chambre de brassage (9) est couplée par entraînement au mécanisme d'actionnement (15) et est mobile sous la commande du mécanisme d'actionnement (15) dans la direction d'ouverture et de fermeture (F) par rapport à la structure de support (3).

14. Unité de brassage (1) selon la revendication 13, dans laquelle la deuxième portion de chambre de brassage (11) est fixe par rapport à la structure de support (3).

15. Unité de brassage (1) selon la revendication 13 ou 14, dans laquelle la première portion de chambre de brassage (9) comprend un réceptacle (25), conçu pour recevoir et supporter la capsule (C) à l'intérieur de celle-ci, lorsque la première portion de chambre de brassage (9) se déplace de la position ouverte à la position fermée.

16. Machine de production de boissons (61) comprenant une unité de brassage (1) selon l'une quelconque des revendications précédentes.
